# EUROPÄISCHE PATENTANMELDUNG

(11) **EP 3 395 585 A1**
(43) Veröffentlichungstag der Anmeldung: **31.10.2018**
(21) Anmeldenummer: 18000396.4
(22) Anmeldetag: 24.04.2018
(51) Int. Cl.: B44C 1/10, B32B 7/12, B32B 27/00, C09J 7/22, B44C 5/04

(54) **OBERFLÄCHENMATERIAL UND HIERMIT VERSEHENER GEGENSTAND**

(30) Priorität: 26.04.2017 DE 102017004028
(71) Anmelder: Aluminium Féron GmbH & Co. KG, 52355 Düren (DE)
(72) Erfinder: FÉRON, Berthold, 52372 Kreuzau Bergheim (DE); BRANDENBURG, Marc, 52385 Nideggen (DE)
(74) Vertreter: Hauck Patentanwaltspartnerschaft mbB

(57) **Zusammenfassung**

Es wird ein Oberflächenmaterial zur Anbringung auf Substraten, insbesondere den Oberflächen von Möbelstücken, Bauelementen u.dgl., beschrieben. Das Oberflächenmaterial umfasst eine Kunststofffolie (1), die zumindest partiell durchsichtig oder durchscheinend ist, und das Material weist auf der dem Substrat (5) zugewandten Seite eine durchgehend transparente Lackschicht (2) auf. Hierdurch ist es möglich, nach der Aufbringung des Oberflächenmateriales auf ein Substrat die oberste Substratschicht, beispielsweise ein Dekorpapier, zu sehen, so dass sich entsprechend dekorative Effekte erzielen lassen. Ferner wird ein Gegenstand beschrieben, der ein Substrat aufweist, das mit einem derartigen Oberflächenmaterial versehen ist.

## Beschreibung

Die vorliegende Erfindung betrifft ein Oberflächenmaterial zur Anbringung auf Substraten, insbesondere den Oberflächen von Möbelstücken, Bauelementen u.dgl., umfassend eine Kunststofffolie.

Ein farbiges Oberflächenmaterial ist bekannt. Es wird auf entsprechende Substrate, wie beispielsweise die Oberflächen von Möbelstücken, aufgebracht, um dem Möbelstück ein dekoratives farbiges Aussehen zu verleihen. Auch kann es sich bei den Substraten beispielsweise um Oberflächen von Bauelementen für den Innenausbau handeln. Die Substrate können beispielsweise aus Holz, Kunststoff, Metall oder geeigneten Verbundwerkstoffen bestehen. Auch können beispielsweise geeignete Kunststoffschäume, Faserverbundwerkstoffe u.dgl. Materialien solche Substrate bilden.

Um derartigen Oberflächenmaterialien ein farbiges Aussehen zu verleihen, ist es bekannt, die Materialien durchzufärben. Für die Herstellung der entsprechenden Kunststofffolie kommen dabei farbige Granulate zum Einsatz, so dass für das fertige Oberflächenmaterial eine durchgefärbte Kunststofffolie verwendet wird. Geeignete Kunststoffe für derartige Anwendungszwecke sind beispielsweise Polyvinylchlorid oder Polypropylen.

Es ist somit bekannt, für ein derartiges farbiges Oberflächenmaterial eine Kunststofffolie aus einem entsprechenden farbigen Granulat herzustellen, so dass sich dann ein durchgefärbtes Oberflächenmaterial ergibt. Die durchgefärbte Kunststofffolie wird über übliche Kleber, beispielsweise Hot-Melt-Kleber, Dispersionskleber, auf das zugehörige Substrat aufgebracht und mit diesem verbunden. Die Vorgehensweise hat jedoch herstellungstechnisch gewisse Nachteile, da die Herstellung der zugehörigen Kunststofffolien mittels farbiger Granulate aufwendig und teuer ist. Insbesondere lassen sich hiermit kleinere Materialmengen nicht oder nur in beschränkter Weise wirtschaftlich herstellen.

In der GB 1 267 469 A ist ein laminierbarer Film beschrieben, der eine transparente Kunststoffschicht aufweist, die mit einer dekorativen Schicht und einem siegelfähigen Grundüberzug, mit dem eine Verklebung mit einem Substrat durchgeführt werden soll, versehen ist. Die dekorative Schicht kann dabei durch einen geeigneten reproduktiven Prozess aufgebracht werden, beispielsweise eine Gravur oder einen anderen Druckprozess.

Aus der US 5 480 698 A ist ein Laminat bekannt, das eine transparente Acrylschicht aufweist, welche mit einem klaren Urethanharz, einem Farbüberzug, einem Primer und einem Kleber zur Verbindung mit einem Substrat versehen ist.

Die US 4 293 603 A beschreibt ein Laminat, bei dem eine transparente Acrylschicht mit einem dekorativen Muster, einem Primer und einem Kleber für ein Substrat versehen ist. Es kann hierbei eine abrasionsfeste Acrylschicht verwendet werden, damit eine kratzfeste Schicht erreicht wird.

Die DE 298 05 614 U1 beschreibt eine Polyesterschicht, die eine erste Oberfläche zum Ankleben an ein Substrat und eine zweite Oberfläche zur Aufbringung einer Dekorschicht besitzt. Die Dekorschicht wird hierbei nicht zum Verbinden mit dem Substrat benutzt.

Aus der US 2012/088047 A1 ist ein transparenter Film bekannt, der mit einer Metallschicht und einer Farbschicht versehen ist. Zur Anbringung an einem Substrat wird ein zusätzlicher Kleber verwendet.

Der vorliegenden Erfindung liegt die Aufgabe zugrunde, ein Oberflächenmaterial der eingangs beschriebenen Art zu schaffen, das besonders einfach herstellbar und variabel einsetzbar ist.

Diese Aufgabe wird erfindungsgemäß durch ein Oberflächenmaterial mit den Merkmalen von Patentanspruch 1 gelöst.

Bei dem erfindungsgemäß ausgebildeten Oberflächenmaterial findet daher nicht wie beim Stand der Technik eine durchgefärbte Kunststofffolie mit Kleber Verwendung, sondern das Material wird mit einer Schicht aus einem die Haftung bewirkenden Lack versehen, während die eigentliche Kunststofffolie zumindest partiell durchsichtig oder durchscheinend ausgebildet ist. Die als Haftungsschicht zur Anbringung am Substrat ausgebildete Lackschicht ist dabei durchgehend transparent, so dass der Betrachter darunterliegende Schichten des Substrates, beispielsweise entsprechende Dekorpapiere, erkennen kann. Das Oberflächenmaterial ist daher insgesamt zumindest partiell durchsichtig oder durchscheinend, so dass sich entsprechende dekorative Effekte in Verbindung mit der Substratoberfläche erzielen lassen. Das Oberflächenmaterial kann daher quasi als Overlay angesehen werden.

Die erfindungsgemäß verwendete Kunststofffolie kann eine beliebige Kunststofffolie sein, die zumindest partiell durchsichtig oder durchscheinend ausgebildet ist. Als Materialien hierfür kommen beispielsweise Polyvinylchlorid, Polypropylen, Acrylate, amorpher und kristalliner Polyester etc. in Frage. Die Kunststofffolie kann dabei beispielsweise eine Dicke von 0,1 bis 1 mm aufweisen.

Als transparenter Lack können übliche Lacke Verwendung finden, beispielsweise Zweikomponentenlacksysteme, Einkomponentenlacksysteme. Die Erfindung ist nicht auf die Verwendung von speziellen Kunststofffolien und/oder speziellen Lacksystemen beschränkt.

Mit dem für die Kunststofffolie gebrauchten Begriff "partiell durchsichtig oder durchscheinend" sind hier alle möglichen Varianten zwischen transparent und opak gemeint. Dies schließt auch örtlich begrenzte Bereiche ein, die sich von anderen örtlich begrenzten Bereichen unterscheiden.

Bei einer bevorzugten Ausführungsform des erfindungsgemäßen Oberflächenmateriales ist die Lackschicht als Konterlack direkt auf der Kunststofffolie aufgebracht. Bei einer anderen Ausführungsform ist zwischen der Kunststofffolie und der Lackschicht mindestens eine weitere zumindest partiell durchsichtige oder durchscheinende Schicht angeordnet. Hierbei kann es sich beispielsweise um einen Klarlack handeln. Die weitere Schicht kann auch mattiert bzw. partiell mattiert sein.

Generell ist zu sagen, dass die Schicht aus dem transparenten Lack aus einer einzigen Schicht oder aus mehreren Schichten bestehen kann.

Wenn zwischen Kunststofffolie und Lackschicht eine Zwischenschicht angeordnet ist, kann diese auch vorgesehen sein, um in Verbindung mit der Lackschicht einen speziellen Farbeffekt zu erzeugen, beispielsweise Mischfarben zu generieren.

Die erfindungsgemäß vorgesehene Lackschicht ist als äußerste Schicht zur Anbringung am Substrat ausgebildet. Die Lackschicht selbst ist dabei als Haftungsschicht ausgebildet, die die Haftverbindung mit dem Substrat herstellt.

Vorzugsweise ist die Lackschicht so ausgebildet, dass das Oberflächenmaterial durch Einwirkung von erhöhtem Druck und erhöhter Temperatur, insbesondere durch ein HPL-Verfahren, auf das Substrat aufbringbar ist. Bei dieser Ausführungsform wird das Oberflächenmaterial zusammen mit dem Substrat bei erhöhtem Druck und erhöhter Temperatur verpresst, wobei Druck und Temperatur vom jeweiligen Verarbeitungsprozess abhängig sind. Beispielsweise kommen hierbei Drücke von 80-100 bar und Temperaturen von 150-180 °C zur Anwendung (HPL = High Pressure Laminate).

Auch kann das CPL-Verfahren (Continuous Pressure Laminate) Anwendung finden, das vorzugsweise bei Drücken von 25-50 bar und Temperaturen von 170-190 °C durchgeführt wird, ebenfalls das KT-Verfahren.

Vorzugsweise weist die Kunststofffolie auf ihrer vom Substrat abgewandten Seite mindestens eine weitere Schicht auf, bei der es sich beispielsweise um eine solche handeln kann, die dem Material Kratzfestigkeit bzw. Scheuerfestigkeit verleiht. Auch kann die weitere Schicht zumindest teilweise als Farbschicht ausgebildet sein, um entsprechende Dekoreffekt zu erzeugen, beispielsweise entsprechende Changiereffekte.

Die mindestens eine weitere Schicht kann als radikalisch härtende Schicht (Strahlenhärtung) ausgebildet sein.

Diese zusätzlichen Schichten können beispielsweise über geeignete Kaschierkleber auf die Kunststofffolie aufgebracht werden. Es versteht sich, dass diese Schichten zumindest partiell durchsichtig oder durchscheinend sein müssen, um die Substratoberfläche in der gewünschten Weise erkennen zu können.

Bei dem erfindungsgemäß ausgebildeten Oberflächenmaterial kann die vom Substrat abgewandte Außenseite, die entweder durch die Kunststofffolie selbst oder durch mindestens eine weitere Schicht gebildet wird, verschiedene Strukturen aufweisen, beispielsweise matt, semimatt, glänzend etc.

Wie bereits erwähnt, kann sich die Lackschicht aus mehreren Lagen zusammensetzen.

Die vorliegende Erfindung bezieht sich ferner auf einen Gegenstand, insbesondere Möbelstück, Bauelement u.dgl., mit einem Substrat und einem damit verbundenen Oberflächenmaterial umfassend eine Kunststofffolie. Dieser Gegenstand ist durch die Merkmale von Patentanspruch 8 gekennzeichnet.

Die Verbindung des Oberflächenmateriales mit dem Substrat erfolgt hierbei über die durchgehend transparente Lackschicht. Hierbei übernimmt daher die Lackschicht selbst die Haftungsfunktion, und es findet kein zusätzliches Haftmittel Verwendung. Eine solche Haftung kann beispielsweise durch Verpressen des Oberflächenmateriales mit dem Substrat bei erhöhtem Druck und erhöhter Temperatur erreicht werden, die zu einem Aushärten der noch reaktiven Haftungsschicht führt. Als Beispiel sei hier das bereits vorstehend genannte HPL-, CPL- oder KT-Verfahren erwähnt.

Bei dem hier beanspruchten Gegenstand umfasst das Oberflächenmaterial zwingend eine zumindest partiell durchsichtige oder durchscheinende Kunststofffolie sowie auf der Seite zum Substrat hin eine durchgehend transparente Lackschicht, die den entsprechenden Effekt erzeugt. Zusätzlich dazu kann das Oberflächenmaterial zusätzliche Zwischenschichten zwischen der Lackschicht und der Kunststofffolie und zusätzliche Schichten von der Kunststofffolie zur Oberseite des Gegenstandes hin aufweisen. Bei diesen zusätzlichen Schichten kann es sich beispielsweise um Primerschichten, Haftschichten, Schichten zur Erhöhung der Kratzfestigkeit oder Scheuerfestigkeit, Verdickungsschichten etc. handeln.

Die Erfindung betrifft ferner ein Verfahren gemäß Patentanspruch 10.

Die Erfindung wird nachfolgend anhand von Ausführungsbeispielen in Verbindung mit der Zeichnung im Einzelnen erläutert. Es zeigen:
- Figur 1: eine erste Ausführungsform eines Oberflächenmateriales im Vertikalschnitt nicht maßstabsgetreu;
- Figur 2: eine zweite Ausführungsform des Oberflächenmateriales im Vertikalschnitt nicht maßstabsgetreu; und
- Figur 3: einen Teil eines mit einem Oberflächenmaterial einer dritten Ausführungsform versehenen Gegenstandes im Vertikalschnitt nicht maßstabsgetreu.

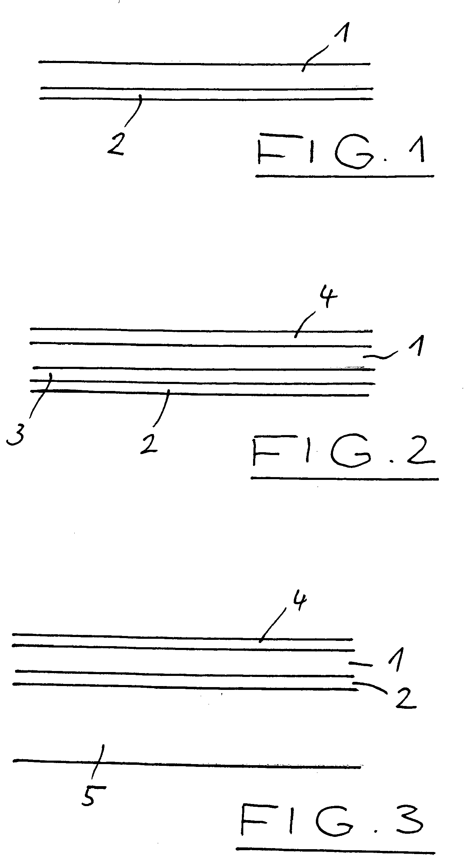

Das in Figur 1 dargestellte Oberflächenmaterial besitzt eine Kunststofffolie 1, bei der es sich beispielsweise um eine PVC-Folie handeln kann, deren eine Seite (die zum Substrat hin weisende Seite) mit einem transparenten Konterlack versehen ist, der in einer Schicht oder in mehreren Schichten auf die Kunststofffolie 1 aufgestrichen ist.

Bei der in Figur 2 dargestellten Ausführungsform weist das Oberflächenmaterial ebenfalls eine Kunststofffolie 1, beispielsweise PVC-Folie, auf, auf die zur Substratseite hin ein Klarlack 3 als Zwischenschicht aufgetragen ist. Diese Zwischenschicht ist mit einem transparenten Lack 2 als Konterlack versehen. Auf der gegenüberliegenden Seite der Kunststofffolie 1 befindet sich eine weitere Kunststoffschicht 4 zur Erhöhung der Kratzfestigkeit bzw. Scheuerfestigkeit.

Bei beiden Oberflächenmaterialien der Figuren 1 und 2 findet eine durchsichtige PVC-Folie Verwendung, so dass durch die als Konterlack vorgesehene transparente Lackschicht 2 der Eindruck eines durchgehend transparenten Oberflächenmateriales hervorgerufen wird, so dass der Betrachter die darunterliegende Oberflächenschicht des Substrates, beispielsweise ein entsprechendes Dekorpapier, erkennen kann.

Figur 3 zeigt einen Teil eines Gegenstandes, beispielsweise eines Möbelstückes, bei dem ein Substrat 5 mit einem Oberflächenmaterial versehen ist. Bei dieser Ausführungsform umfasst das Oberflächenmaterial ebenfalls eine durchsichtige PVC-Folie als Kunststofffolie 1, die auf ihrer Oberseite mit einer Lackschicht 4 versehen ist, welche die Kratzfestigkeit des Materiales erhöht. Zur Substratseite hin besitzt das Oberflächenmaterial eine transparente Lackschicht 2, mit der die entsprechende Seite der Kunststofffolie 1 bestrichen ist. Das Oberflächenmaterial und das Substrat werden bei erhöhter Temperatur und erhöhtem Druck miteinander verpresst, beispielsweise durch das vorstehend beschriebene HPL-Verfahren, so dass sich als Endprodukt ein mit einem entsprechenden transparenten Oberflächenmaterial versehenes Substrat ergibt.

### Ausführungsbeispiel

Eine zumindest partiell durchsichtige Folie auf Basis von Polyethylenterephtalat in einer Stärke von 100 pm, die einseitig mit einer handelsüblichen, radikalisch härtenden Lackierung versehen war, wurde auf der Rückseite mit einem transparenten Lack auf Basis von Polyol-Isocyanat versehen. Je nach Intensität der Einfärbung wurde hierbei ein Auftragsgewicht der Lackierung im Bereich von 10-100 g/m² gewählt, um eine hohe Opazität zu erzielen.

Das auf der Rückseite mit dem transparenten Lack versehene Folienmaterial wurde direkt einem Verfahren unterzogen, das unter Druck und Temperatur zur Herstellung von Möbeloberflächen eingesetzt wird. Das erstellte Folienmaterial wurde bei einer Temperatur von 140 °C und einem Druck von 60 bar nach dem HPL-Verfahren mit phenolharzgetränkten und/oder melaminharzgetränkten Papieren verpresst. Die Konterlackschicht war dabei so aufgebaut, dass eine sehr gute Haftung zwischen dem Konterlack und der Unterlage erzielt wurde.

## Patentansprüche

1. Oberflächenmaterial zur Anbringung auf Substraten umfassend eine Kunststofffolie, die als zumindest partiell durchsichtige oder durchscheinende Kunststofffolie (1) ausgebildet ist, wobei das Material auf der dem Substrat (5) zugewandten Seite eine durchgehend transparente Lackschicht (2) aufweist, die als Haftungsschicht für das Substrat ausgebildet ist.

2. Oberflächenmaterial nach Anspruch 1, **dadurch gekennzeichnet, dass** die Lackschicht (2) als Konterlack direkt auf der Kunststofffolie (1) aufgebracht ist.

3. Oberflächenmaterial nach Anspruch 1, **dadurch gekennzeichnet, dass** zwischen der Kunststofffolie (1) und der Lackschicht (2) mindestens eine weitere zumindest partiell durchsichtige oder durchscheinende Schicht (3) angeordnet ist.

4. Oberflächenmaterial nach einem der vorangehenden Ansprüche, **dadurch gekennzeichnet, dass** die Lackschicht (2) so ausgebildet ist, dass das Oberflächenmaterial durch Einwirkung von erhöhtem Druck und erhöhter Temperatur, insbesondere durch ein HPL-, CPL- oder KT-Verfahren, auf das Substrat (5) aufbringbar ist.

5. Oberflächenmaterial nach einem der vorangehenden Ansprüche, **dadurch gekennzeichnet, dass** die Kunststofffolie (1) auf ihrer vom Substrat (5) abgewandet Seite mindestens eine weitere Schicht (4) aufweist.

6. Oberflächenmaterial nach Anspruch 5, **dadurch gekennzeichnet, dass** die mindestens eine weitere Schicht (4) eine solche ist, die dem Material Kratzfestigkeit bzw. Scheuerfestigkeit verleiht.

7. Oberflächenmaterial nach Anspruch 5 oder 6, **dadurch gekennzeichnet, dass** die weitere Schicht (4) eine Farbschicht ist, die entsprechende Farbeffekte erzeugt.

8. Gegenstand mit einem Substrat und einem damit verbundenen Oberflächenmaterial umfassend eine Kunststofffolie, die als zumindest partiell durchsichtige oder durchscheinende Kunststofffolie (1) ausgebildet ist, wobei das Oberflächenmaterial auf der dem Substrat (5) zugewandten Seite eine durchgehend transparente Lackschicht (2) aufweist, die als Haftungsschicht für das Substrat ausgebildet ist.

9. Gegenstand nach Anspruch 8, **dadurch gekennzeichnet, dass** das Oberflächenmaterial durch Einwirkung von erhöhtem Druck und erhöhter Temperatur, insbesondere durch ein HPL-, CPL- oder KT-Verfahren, mit dem Substrat (5) verbunden ist.

10. Verfahren zur Aufbringung eines Oberflächenmateriales umfassend eine Kunststofffolie (1) und eine durchgehend transparente Lackschicht (2) auf ein Substrat (5) eines Gegenstandes, insbesondere Möbelstückes, Bauelementes u.dgl., bei dem das Oberflächenmaterial über die als Haftungsschicht ausgebildete Lackschicht (2) durch Einwirkung von erhöhtem Druck und erhöhter Temperatur mit dem Substrat (5) verpresst wird.
